# EUROPEAN PATENT SPECIFICATION

(11) **EP 2 350 740 B1**
(45) Date of publication and mention of the grant of the patent: **23.10.2013**
(21) Application number: 08878152.1
(22) Date of filing: 22.12.2008
(51) Int. Cl.: G03B 21/20, G03B 21/14, H04N 9/31

(54) **PROJECTION SYSTEM**
PROJEKTIONSSYSTEM
SYSTÈME DE PROJECTION

(30) Priority: 13.11.2008 KR 20080112522
(43) Date of publication of application: 03.08.2011
(73) Proprietor: LG ELECTRONICS INC., Yeongdeungpo-gu Seoul 150-721 (KR)
(72) Inventor: KIM, Yang-Sik, Gumi-city Gyoungsangbuk-do 730-727 (KR); JOUNG, Ju-Young, Gumi-city Gyoungsangbuk-do 730-727 (KR); YOON, Chan-Young, Gumi-city Gyoungsangbuk-do 730-727 (KR)
(74) Representative: Frenkel, Matthias Alexander
(86) International application number: PCT/KR2008/007591
(87) International publication number: WO 2010/055969

(56) References cited:
- EP-A1- 1 876 487
- JP-A- 2001 337 394
- JP-A- 2004 046 026
- JP-A- 2006 011 448
- JP-A- 2006 065 192
- JP-A- 2006 301 491
- JP-A- 2007 034 102
- JP-A- 2008 116 911
- US-A- 5 847 507

## Description

### Technical Field

The present invention relates to a projection system.

### Background Art

A projection system is a device that carries image signals on light emitted from a light-emitting device, projects them on a front or rear surface of a screen, and allows a viewer to view them. As the projection system, there are a CRT scheme, a digital micro mirror device scheme, an Lcos scheme, a transmission LCD scheme and the like according to an operation scheme.

As a conventional example of the projection system, there is WO 99/64912A1 (hereinafter, referred to as Cited Document). The Cited Document discloses a scheme that synthesizes light emitted from a light-emitting diode of red, green, and blue colors by a prism and transmits it to a display device such as an LCD display. Further, the prism is disposed around the display device such as an LCD or a DMD forming the image signals and is used for synthesizing the image signals.

JP 2001-337394 relates to a compact illumination optical device equipped with an ellipsoidal mirror condensing the light from a light source and an illuminating area correcting optical element consisting of a rotary asymmetric lens element.

JP 2006-065192 relates to a small-sized and simple projector having a lamp light source and an LED light source as well as a DMD for leading the light from the lamp light source to the projection lens or for leading the light from the LED light source to the projection lens by changing over the reflection angles.

JP 2004-046026 relates to a projection type display device thin in thickness having a rod integrator and a relay lens having their optical axes nearly parallel to the optical axis of a projection lens and are arranged closer to the projection lens than a reflection type image display element.

JP 2007-034102 relates to a rear projection type projector having a plurality of mirrors arranged in a matrix form, where each mirror includes a DMD for making on and off states by independently changing the tilt to change an outgoing angle of the reflected light.

However, the scheme using the prism reduces brightness due to a loss of light occurring while light passes through a boundary of each glass structure forming the prism, increases a size of the projection system due to the use of the prism having a large volume, increases the cost of materials and is difficult to assemble, is inconvenient to accurately control an optic axis, and when the optic axis is deviated during the use, needs to correct it, and the like.

### Disclosure of Invention

### Technical Problem

In order to improve all the disadvantages, it is an object of the present invention to provide a projection system that has a small size, convenience of handle according to the small-sized projection system, and assurance of a competitive price, and increases brightness of an image.

### Technical Solution

In order to achieve the objects, a projection system of the present invention comprises: at least one light-emitting device; a time division supplying device of light that time-divides light emitted from the at least one light-emitting device and supplies it; a first condensing lens that focuses light passing through the time division supplying device of light; a first mirror that reflects light passing through the first condensing lens; an integrator that makes light reflected from the first mirror into a planar light; a second mirror that reflects light passing through the integrator; a third mirror that reflects light reflected from the second mirror to a DMD side; and a projection lens that projects light reflected from the second mirror onto a screen and has an optic axis, at both sides of which the second mirror and the third mirror are disposed respectively.

An optic axis of an optical path, which connects the first mirror and the second mirror, is distorted within 2° to 18° with respect to the optic axis of the projection lens, such that light moving from a light emitting side of the integrator becomes farther from the optic axis of the projection lens.

### Advantageous Effects

With the present invention, the various problems of the conventional projection system can be solved. Further, the present invention can increase the brightness of the image obtainable by the projection system, obtain the small-sized and low cost projection system, make it convenient to handle the projection system, and prevent a default of the projection system and obtain the inconvenience of assembly due to the simple structure and can obtain various advantages in addition to the above-mentioned advantages.

### Brief Description of Drawings

FIG. 1 is a plan view of a projection system according to an exemplary embodiment;

FIG. 2 is a front view of the projection system according to an exemplary embodiment; and

FIG. 3 is a view showing a correlation between a projection lens and a unit vector in a optical path that connects a second mirror and a third mirror.

### Mode for the Invention

Hereinafter, an exemplary embodiment of the present invention will be described in detail with reference to the accompanying drawings.

However, the subject matters of the present invention are not limited to the following embodiments but are defined by the appended claims.

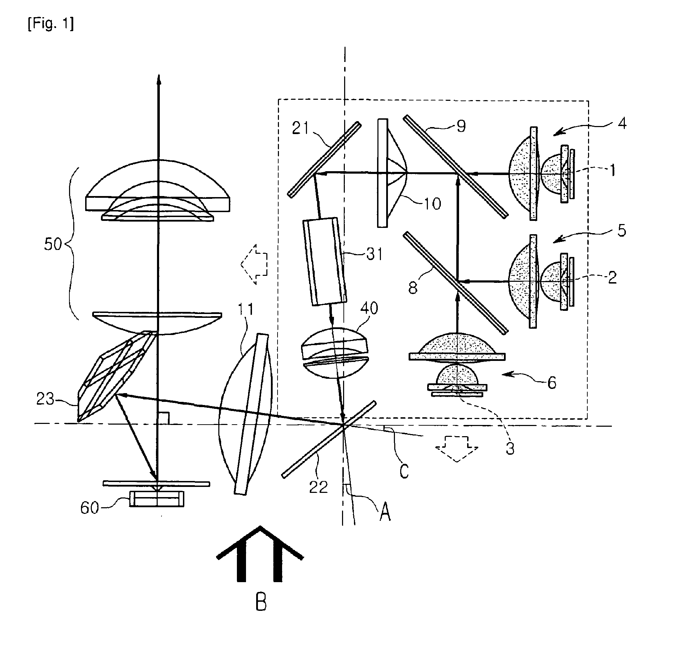

FIG. 1 is a structural view of a projection system according to an exemplary embodiment and shows a plan view.

Referring to FIG. 1, the projection system includes a first light-emitting device 1, a second light-emitting device 2, a third light-emitting device 3, collimators 4, 5, and 6 that focus light emitted from the light-emitting devices 1, 2, and 3, dichroic mirrors 8 and 9 that accurately synthesizes three colors of red, green, and blue, a first condensing lens 10 that focuses light, a first mirror 21 that reflects light, an integrator 31 that equally makes brightness of light into planar light within the overall region of an image, a relay lens 40, a second mirror 22 that reflects light, a second condensing lens 11 that focuses light, a DMD 60, a third mirror 23 that is interposed between the DMD 60 and the second condensing lens 11 and reflects the optical path to a side of the DMD 60, and a projection lens that projects light to a screen.

The DMD 60 is provided with a plurality of small-sized mirrors whose reflection angle is controlled and controls image signals according to whether reflection light faces the projection lens 50 or not on the base of the reflection angles of the small-sized mirrors. The DMD 60 is a known article and therefore, the detailed description thereof will not be repeated.

Each component of the projection system will be described in detail.

<Light-emitting devices 1, 2, and 3>

On/Off of the light-emitting devices should be controlled at very short instant. Preferably, as the light-emitting device, a light-emitting diode (LED) can be used. The first light-emitting device 1 is blue, the second light-emitting device 2 green, the third light-emitting device red. Each of these light-emitting devices light-emits colors corresponding to three colors of light. The light-emitting devices 1, 2, and 3 are temporally synchronized with the DMD 60 such that the light-emitting devices 1, 2, and 3 meeting the operation state of the current DMD 60 are sequentially turned-on/off at a time difference and three colors of red, green, and blue are time-serially projected on the screen. A user cannot discriminate the colors corresponding to the time-serially projected light and recognizes it as a single color.

<Collimators 4, 5, and 6>

The collimators 4, 5, and 6 are lenses that primarily focus light emitted from the light-emitting devices 1, 2, and 3. The collimator may be provided in plural number. Among others, the lenses, that are most adjacent to the light-emitting devices 1, 2, and 3, are provided in a form where one surface is convex and one surface is concave and is manufactured in a form where the light-emitting devices 1, 2, and 3 are inserted into a concaved one surface. By the above configuration, light emitted from the light-emitting devices 1, 2, and 3 is not leaked to the outside, such that light is effectively irradiated to the collimator and can be used as an effective light source of the projection system.

When the collimator a case of a collimator that is provided as a resin material so as to improve color purity of light emitted from each light-emitting device, dyes corresponding to colors themselves can provide colors to the collimator. When the collimator is provided as a resin material or glass, films corresponding to colors are coated on a surface of each of the surfaces of the corresponding collimators or paint is painted thereon. By this structure, the color purity of light emitted from the light-emitting device can be more improved.

<Dichroic mirror>

The dichroic mirrors 8 and 9 are a mirror that selectively transmits or reflects light and is set to be fitted to types of the light-emitting devices 1, 2, and 3. In detail, the first dichroic mirror 8 transmits red light emitted from the third light-emitting device 3 and reflects green light emitted from the second light-emitting device 2. The second dichroic mirror 9 transmits blue light emitted from the first light-emitting device 1 and reflects green light and red light emitted from the second and third light-emitting devices 2 and 3. Each light emitted from the plurality of light-emitting devices 1, 2, and 3 by the dichroic mirrors 8 and 9 can pass through the single optical path.

<Condensing lenses 10 and 11>

The condensing lenses 10 and 11 serves as a convex lens that prevents a diffusion of light due to wave property of light.

<Mirrors 21, 22, and 23>

The mirrors 21, 22, and 23 are provided to reduce the volume of the projection system by integrating the structure of the projection system and distorts the optical path within the same volume. The arrangement state of the mirrors, which is one characteristic of the present invention, will be described in detail at a latter portion that describes the action of the embodiments.

<Integrator 31>

The integrator 31, which is provided to make light emitted from the light-emitting devices 1, 2, and 3 into a planar light, is to allow images projected on the screen to have the same brightness. The integrator 31 uses a fly eye lens or a light tunnel. In the present embodiment, the light tunnel is used. Further, as an optic axis of the integrator 31 moves to a light emitting side (herein, the movement direction of light is opposite to the movement direction of light), it becomes more distant from the optic axis of light passing through the projection lens 50 (hereinafter, sometimes referred to the optic axis of the projection lens). This contributes to achieving the small-sized projection system. The action thereof will be described later. Also, the integrator 31 can be manufactured by a light funnel where an area of a light incident side is larger than a light emitting side in order to increase the use efficiency of light.

<Relay lens 40>

The relay lens 40, which focuses light emitted from the integrator 31, plays a role of preventing the diffuse of light emitted from the integrator 31 and re-focusing light. Two relay lenses 40 are used, such that the size of the projection system is more reduced.

<DMD 60>

The DMD has a structure where a plurality of small-sized mirrors capable of controlling a reflection angle are integrated, wherein the small-sized mirrors correspond to each pixel to determine whether images are focused or not according to whether the reflected light appropriately passes through the projection lens 50.

The projection system having the above-mentioned configuration will be described.

The light emitted from the light-emitting devices 1, 2, and 3 is focused by the collimators 4, 5, and 6. At this time, the collimators 4, 5, and 6 can improve the color purity of light emitted from each of the light-emitting devices 1, 2, and 3 by a method of coating/painting the surface of the collimator or a method of allowing the materials of the collimator itself to include dyes, and the like. This it to make natural light as maximally as possible by removing light having different wavelength bands in consideration of other light having wavelength bands different from the natural light according to the types of the semiconductor compounds of the LED, when the LED is as the light-emitting device.

Further, the light-emitting devices 1, 2, and 3 are light-emitted in a time-division scheme in the state where they are synchronized with the DMD 60 and the light-emitting devices 1, 2, and 3 corresponding to the current on/off state of the small-sized reflection mirrors formed on the DMD 60 are selectively light-emitted.

In the light passing through the collimators 4, 5, and 6, only the light synchronized with the current DMD 60 passes through the optical path during passing through the dichroic mirrors 8 and 9. If the light passes through the second dichroic mirror 9, it passes through the first condensing lens 10 and is re-focused, which is in turn reflected by the first mirror 21.

The first mirror 21 sets the incidence angle and the reflection angle to be larger than 45°. Referring to FIG. 1, this is to deflect the light reflected from the first mirror 21 to the right when the reflected light is downwardly. By the configuration, it is possible to satisfy a length of an optical path necessary for the projection system as well as reduce the physical size of the projection system. In detail, when the light emitted from the DMD 60 is based on the direction of light emitted through the projection lens 50, that is, the optic axis of the projection lens, the angle A formed by the light reflected from the first mirror 21 and the optic axis of the projection lens is set to be larger than 0. Preferably, the range of the angle A is 2 to 18° having a difference by 8° based on 10°. By this configuration, each component of a portion partitioned by a dotted line in FIG. 1 can be disposed to be more deflected to the left based on FIG. 1, such that the size of the left and right direction of the projection system can be reduced. In other words, referring to FIG. 1, a right end of the projection system can further move to the left. Herein, it is preferable to increase the size of the angle A. However, this causes the non-uniformity of brightness of light in left and right directions inside the complicated optical path or reduces the use efficiency of light. Even when the angle A increases, the minaturization is limited due to the interference between the projection lens and the space partitioned by the dotted line. Further, if the angle A is smaller than the proposed angle, the degree of miniaturization of the projection system becomes small such that it is not impossible to obtain the effect of miniaturization that is one of the objects of the present invention.

The light passing through the first mirror 21 is a planar light in the integrator 31 and is focused through the relay lens 40. Thereafter, it is reflected from the second mirror 22.

The light reflected from the second mirror 22 moves upwardly with reference to FIG. 1. In detail, in FIG. 1, an angle C formed by an orthogonal direction and the light reflected from the second mirror 22 with respect to the optic axis of the projection lens is not parallel. As such, when the light reflected from the second mirror 22 moves upwardly, the components of the projection system can move up to the lowest end of the projection system with reference to FIG. 1. In other words, each of the components of a portion partitioned by a dotted line in FIG. 1 further moves downwardly and is then disposed, such that the size in the up and down directions of the projection system can be reduced. However, in this case, the distance between the DMD 60 and the projection lens 50 may serve as a limit value, but a barrel length of the projection lens 50 can be actually reduced according to the design of the lens. As a result, the distance does not matter.

The light reflected from the second mirror 22 is focused through the condensing lens 11, reflected from the third mirror 23, and then incident into the DMD 60.

Herein, the third mirror 23 and the condensing lens 11 are disposed at the left and right based on the optic axis of the projection lens 50. The optical path length along which light passes through the optical path of the projection lens 50 at least once can be assured, such that it can handle the projection sytem, which is a relative long focal point. By this configuration an optical path having a proper optical path length required for the projection system can be secured, the focusing of light can be achieved, the prism used for the surface of the DMD in the related art. Thereby, the loss of light and the high cost, which are caused by the prism, can be solved. Further, the inconvenience of manufacturing, which should precisely aligns the prism or the field lens to the optic axis, etc., can be solved.

In the DMD 60, by the operation of the small-sized reflection mirror, which is turned-on/off per the pixel, the light reflected by the small-sized reflection mirror in the state of the turn-on state is incident to the screen through the projection lens 50 to form images and the light reflected by the smal-sized reflection mirror in the state of the turn-off state is lost without forming pixels on the screen. The images are formed on the screen by the collection of the reflection light by each of the small-sized reflection mirror.

According to the above description, the cost save can be achieved due to the removal of the prism used for the reflection surface of the DMD 60 and the problem of the loss of light caused by the prism can be solved. The components partitioned by a dotted line in FIG. 1 by controlling the reflection angle of the first mirror 21 and the second mirror 22 moves to the left and lower side based on FIG. 1 (see an arrow), such that the size of the projection size can be miniaturized. The loss of light of the light-emitting device can be reduced and the use efficiency of light can be improved, by providing the convex lens near the light emitting sides of the light-emitting devices 1, 2, and 3 among the lenses of the collimator, wherein one side of the convex lens is concave and the other thereof is convex. The collimator itself is provided with a function of improving the color purity, making it possible to further improve the image quality. Further, comparing with the case of using the prism or the field lens, the fine control of the optic axis is not needed, such that the difficulty in an assembling site can be reduced.

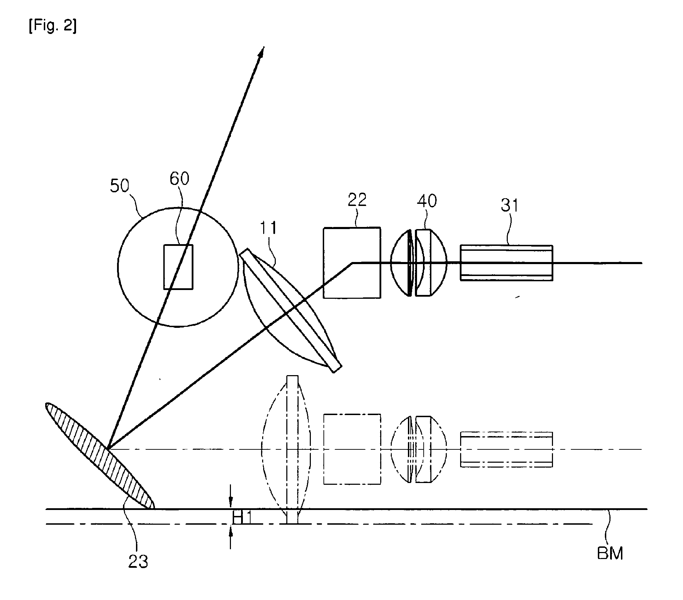

FIG. 2, which is a view showing the projection system viewed in an arrow "B" direction, is a front view of a configuration adjacent to a center of the projection lens.

Referring to FIG. 2, the integrator 31, the second mirror 22, the third mirror 23, the DMD 60, and the projection lens 50 are shown. Herein, the integrator 31 is disposed on the upper side of the third mirror 23, such that the second mirror 22 moves the light passing through the integrator 31 downwardly.

According to the above configuration, the second condensing lens 11 can be inclinedly disposed (in the state where it moves upwardly the lower surface based on the bottom surface of the projection system) along the optical path. According to the above configuration, the height of the bottom surface of the projection system constrained by the second condensing lens having a relatively large size can be increased.

In detail, the second mirror 22 represented by a virtual line is compared with a structure that is disposed to be parallel with the bottom surface (BM) of the projection system so as to reflect light, the second condensing lens 11 moves upwardly. In this case, the bottom surface of the projection system constrained by the second condensing lens 11 can move to the higher position. Thereby, the up and down height of the projection system can be reduced by H1. Further, the lowest height of the projection system is constrained by the third mirror 23 and the lowest height of the projection system is defined by the low end of the third mirror 23. The second condensing lens 11 is largely provided to increase the focusing efficiency of light and the mounting position of the second condensing lens 11 can move upwardly from the bottom surface of the projection system, such that the size of the projection system is small.

When observing the optical path as described above, if the optic axis of the projection lens is referred to as the XYZ spatial coordinate system, the optic axis of light moving from the second mirror 22 to the third mirror 23 does not have the orthogonal or parallel relationship to any axis of XYZ-axes. Thereby, the miniaturization of the projection system can be achieved as described above. Of course, it can be easily appreciated that the reduction of the size of the projection system in an XY direction on the XYZ coordinate system can be achived by distorting the angle A formed by the light reflected from the first mirror 21 and the optic axis of the projection lens within the range of 2 to 18° having a difference by 8° based on 10°.

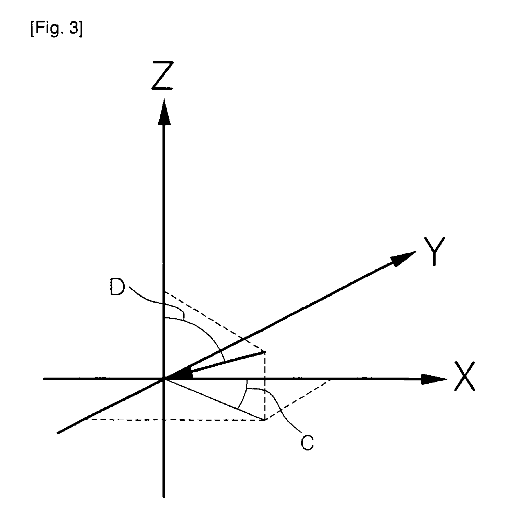

FIG. 3 is a view showing a correlation between the optic axis of the projection lens and a unit vector in a optical path that connects the second mirror and the third mirror.

Referring to FIG. 3, in the XYZ three-dimensional coordinate system, the Z-axis means an up and down height of the projection system and an XY plane means the plane of the projection system in all directions. On the XYZ coordinates, if the Y-axis is referred to as an optic axis of the projection lens 50, the unit vector of the optical path, which connects the second mirror and the third mirror, may be the same as one represented by a solid line of FIG. 3.

The unit vector is a negative vector moving toward a negative direction to the Z-axis and means one that moves downwardly by an angle "D" and means a vector that moves to the right upward on the plane. In other words, it is a vector that moves to the negative direction with respect to the X-axis and is a vector that moves to the positive direction with respect to the Y-axis. Since the angle of the unit vector does not form the parallel relationship to all the three directions, which are XYZ directions, in particular, the orthogonal or parallel relationship to the Z-axis, the unit vector does not have the parallel state with respect to the bottom surface (BM) of the projection system of the integrator 31, but is rotated by a predetermined angle.

Based on the plan view of the projection system shown in FIG. 1, the above-mentioned projection system can secure the optical path having the predetermined length since the unit vector moves to the right upward and the plane size of the projection system can be miniaturized. Based on the front view of the projection system shown in FIG. 2, the above-mentioned projection system can secure the optical path having the predetermined length and the size in the up and down directions of the projection system can be miniaturized, since the unit vector moves downwardly.

The ideas of the present invention can further include the following embodiments in addition to the above-mentioned embodiments. First, the light-emitting devices 1, 2, and 3 and the dichroic mirrors are a time division supplying device that time-divides light and supplies it. Herein, it can be understood that the time division supplying device of light includes a controlling device that time-divides the light emitted from the light-emitting devices 1, 2, and 3 and controls the on/off thereof. Herein, the time-division supplying device of light may be provided in a structure that time-divides light by passing through a white light-emitting device and a color filter rotating the light emitted from the white light-emitting device at a high speed and supplies it. Further, even when the dichroic mirror is used, the light-emitting device can be used by controlling the light-emitting time in the state where two or more light-emitting devices are mounted on a single mount structure.

Further, the projection system according to the embodiment makes the light from the ligh-emitting device into the planar light through the integrator 31 and focuses the images by the predetermined projection structure. However, the present invention is not limited to the above-mentioned structure and can use all the structures that makes light into the planar light before the light is incident to the second mirror 22. For example, it may be permitted to make light into the planar light using the fly eye lens as well as to use a lamp as the light-emitting device. However, according to the ideas of the present invention to achieve the miniaturization, it is more preferable to use the structures shown in the above-mentioned embodiments.

### Industrial Applicability

With the present invention, when the projection system is used as a projector, it can be conveniently carried. For example, a user can carry the projector in the state where the projector is put in the bag as one article, which can change the market of the projector as a new industry.

## Claims

1. A projection system comprising:
at least one light-emitting device (1, 2, 3);
a time division supplying device of light that time-divides light emitted from the at least one light-emitting device (1, 2, 3) and supplies the time-divided light;
a first condensing lens (10) that focuses light passing through the time division supplying device of light (8, 9);
a first mirror (21) that reflects light passing through the first condensing lens (10);
an integrator (31) that makes light reflected from the first mirror (21) into a planar light;
a second mirror (22) that reflects light passing through the integrator (31);
a DMD (60);
a third mirror (23) that reflects light reflected from the second mirror (22) to the DMD (60); and
a projection lens (50) that projects light reflected from the DMD (60) onto a screen and has an optic axis, at both sides of which the second mirror (22) and the third mirror (23) are disposed respectively,
**characterized in that** an optic axis of an optical path, which connects the first mirror (21) and the second mirror (22), is distorted within 2° to 18° with respect to the optic axis of the projection lens (50), such that light moving from a light emitting side of the integrator (31) becomes farther from the optic axis of the projection lens (50).

2. The projection system according to claim 1, wherein a front of the light-emitting device (1, 2, 3) is provided with a collimator (4, 5, 6) that uses at least a convex lens whose one surface is concave and the other is convex and the inside of the concave portion of the convex lens is provided with at least a portion of the light-emitting device.

3. The projection system according to claim 2, wherein the collimator (4, 5, 6) is made of a resin material in which dyes are mixed or the surface of the collimator (4, 5, 6) is coated by colors, in order to improve the color purity.

4. The projection system according to claim 1, wherein the third mirror (23) defines a position of the lowest side of the projection system.

5. The projection system according to claim 1, wherein an optic axis of an optical path, which connects the second mirror (22) and the third mirror (23), is not orthogonal or parallel to any of XYZ-axes on a virtual XYZ coordinate system using the optic axis of the projection lens (50) as a Y-axis.

6. The projection system according to claim 1, wherein the at least one light-emitting device (1, 2, 3) is a light-emitting diode of red, green, and blue, and the time division supplying device of light includes a dichroic mirror (8, 9) that integrates each of the optical paths of light emitted from the light-emitting diode of red, green, and blue.

7. The projection system according to claim 1, further comprising two relay lenses provided between the integrator (31) and the second mirror (22).

8. The projection system according to claim 1, wherein the lowest height of the projection system is limited by the third mirror (23).

9. The projection system according to claim 1, further comprising:
a second condensing lens (11),
wherein the second condensing lens is interposed between the second mirror (22) and the third mirror (23), and is inclinedly disposed to a bottom surface of the projection system.

10. The projection system according to claim 5, wherein an optical path, which connects the second mirror (22) and the third mirror (23), moves upwardly when being viewed from a horizontal plane.

## Patentansprüche

1. Ein Projektionssystem umfassend:
mindestens ein Licht-emittierendes Gerät (1, 2, 3);
ein ausgebendes Zeitteilungsgerät für Licht, das Licht, das von dem mindestens einen Licht-emittierenden Gerät (1, 2, 3) emittiert wird, zeitteilt und das zeitgeteilte Licht ausgibt;
einen ersten Kondensor (10), der Licht, das durch das ausgebende Zeitteilungsgerät für Licht (8, 9) hindurchgeht, fokussiert;
einen ersten Spiegel (21), der Licht, das durch den ersten Kondensor (10) hindurchgeht, reflektiert;
einen Integrator (31), der ein Licht, das von dem ersten Spiegel (21) reflektiert wird, zu einem planaren Licht macht;
einen zweiten Spiegel (22), der Licht, das durch den Integrator (31) hindurchgeht, reflektiert;
ein DMD (60);
einen dritten Spiegel (23), der Licht, das von dem zweiten Spiegel (22) reflektiert wird, zu dem DMD (60) reflektiert; und
eine Projektionslinse (50), die Licht, das von dem DMD (60) reflektiert wird, auf einen Schirm projiziert und eine optische Achse aufweist, auf deren beiden Seiten der zweite Spiegel (22) bzw. der dritte Spiegel (23) angeordnet sind,
**dadurch gekennzeichnet, dass** eine optische Achse eines optischen Pfads, der den ersten Spiegel (21) und den zweiten Spiegel (22) verbindet, mit Bezug auf die optische Achse der Projektionslinse (50) zwischen 2° und 18° verdreht ist, so dass sich Licht, das sich von der Licht-emittierenden Seite des Integrators (31) bewegt, von der optischen Achse der Projektionslinse (50) entfernt.

2. Das Projektionssystem gemäß Anspruch 1, wobei eine Vorderseite des Licht-emittierenden Geräts (1, 2, 3) mit einem Kollimator (4, 5, 6) ausgestattet ist, der mindestens eine konvexe Linse verwendet, deren eine Oberfläche konkav und deren andere konvex ist, und wobei die Innenseite des konkaven Bereichs mit mindestens einem Teil des Licht-emittierenden Geräts ausgestattet ist.

3. Das Projektionssystem gemäß Anspruch 2, wobei der Kollimator (4, 5, 6) aus einem Harzmaterial gemacht ist, in das Farbstoffe gemischt sind, oder wobei die Oberfläche des Kollimators (4, 5, 6) mit Farben beschichtet ist, um die Farbreinheit zu verbessern.

4. Das Projektionssystem gemäß Anspruch 1, wobei der dritte Spiegel (23) eine Position der untersten Seite des Projektionssystems definiert.

5. Das Projektionssystem gemäß Anspruch 1, wobei eine optische Achse eines optischen Pfads, der den zweiten Spiegel (22) und den dritten Spiegel (23) verbindet, nicht rechtwinklig oder parallel zu irgendeiner der XYZ-Achsen in einem virtuellen XYZ-Koordinatensystem, das die optische Achse der Projektionslinse (50) als Y-Achse verwendet, ist.

6. Das Projektionssystem gemäß Anspruch 1, wobei das mindestens eine Licht-emittierende Gerät (1, 2, 3) eine rote, grüne und blaue Licht-emittierende Diode ist, und wobei das ausgebende Zeitteilungsgerät für Licht einen dichromatischen Spiegel (8, 9), der jeden der optischen Pfade des von der roten, grünen und blauen Licht-emittierende Diode emittierten Lichts zusammenfasst, einschließt.

7. Das Projektionssystem gemäß Anspruch 1, des Weitern umfassend: zwei Relay-Linsen, die zwischen dem Integrator (31) und dem zweiten Spiegel (22) bereitgestellt werden.

8. Das Projektionssystem gemäß Anspruch 1, wobei die geringste Höhe des Projektionssystems durch den dritten Spiegel (23) begrenzt wird.

9. Das Projektionssystem gemäß Anspruch 1, des Weitern umfassend:
einen zweiten Kondensor (11),
wobei der zweite Kondensor zwischen dem zweiten Spiegel (22) und dem dritten Spiegel (23) eingefügt ist und zu einer Bodenfläche des Projektionssystems geneigt angeordnet ist.

10. Das Projektionssystem gemäß Anspruch 5, wobei sich ein optischer Pfad, der den zweiten Spiegel (22) und den dritten Spiegel (23) verbindet, bei einer Betrachtung von einer horizontalen Ebene aus nach oben bewegt.

## Revendications

1. Système de projection comprenant :
au moins un dispositif d'émission de lumière (1, 2, 3) ;
un dispositif de délivrance de répartition temporelle de lumière qui répartit temporellement une lumière émise de l'au moins un dispositif d'émission de lumière (1, 2, 3) et délivre la lumière répartie temporellement ;
une première lentille de condensation (10) qui focalise une lumière passant à travers le dispositif de délivrance de répartition temporelle de lumière (8, 9) ;
un premier miroir (21) qui réfléchit une lumière passant à travers la première lentille de condensation (10) ;
un intégrateur (31) qui transforme la lumière réfléchie du premier miroir (21) en une lumière plane ;
un deuxième miroir (22) qui réfléchit une lumière passant à travers l'intégrateur (31) ;
un DMD (60) ;
un troisième miroir (23) qui réfléchit une lumière réfléchie du deuxième miroir (22) sur le DMD (60) ; et
un objectif de projection (50) qui projette une lumière réfléchie du DMD (60) sur un écran et a un axe optique, au niveau des deux côtés duquel le deuxième miroir (22) et le troisième miroir (23) sont respectivement disposés,
**caractérisé en ce qu'**un axe optique d'un chemin optique, qui relie le premier miroir (21) et le deuxième miroir (22), est distordu dans une plage de 2° à 18° par rapport à l'axe optique de l'objectif de projection (50), de telle sorte qu'une lumière provenant d'un côté d'émission de lumière de l'intégrateur (31) est éloignée de l'axe optique de l'objectif de projection (50).

2. Système de projection selon la revendication 1, dans lequel un avant du dispositif d'émission de lumière (1, 2, 3) est prévu avec un collimateur (4, 5, 6) qui utilise au moins une lentille convexe dont une surface est concave et l'autre est convexe et l'intérieur de la partie concave de la lentille convexe est prévu avec au moins une partie du dispositif d'émission de lumière.

3. Système de projection selon la revendication 2, dans lequel le collimateur (4, 5, 6) est constitué d'un matériau de résine dans lequel des colorants sont mélangés, ou bien la surface du collimateur (4, 5, 6) est enduite avec des couleurs, afin d'améliorer la pureté de couleurs.

4. Système de projection selon la revendication 1, dans lequel le troisième miroir (23) définit une position du côté le plus bas du système de projection.

5. Système de projection selon la revendication 1, dans lequel un axe optique d'un chemin optique, qui relie le deuxième miroir (22) et le troisième miroir (23), n'est pas orthogonal ou parallèle à l'un quelconque parmi les axes XYZ d'un système virtuel de coordonnées XYZ utilisant l'axe optique de l'objectif de projection (50) comme un axe Y.

6. Système de projection selon la revendication 1, dans lequel l'au moins un dispositif d'émission de lumière (1, 2, 3) est une diode électroluminescente rouge, verte, et bleue, et le dispositif de délivrance de répartition temporelle de lumière inclut un miroir dichroïque (8, 9) qui intègre chacun des chemins optiques de lumière émise par la diode électroluminescente rouge, verte, et bleue.

7. Système de projection selon la revendication 1, comprenant en outre deux lentilles relais prévues entre l'intégrateur (31) et le deuxième miroir (22).

8. Système de projection selon la revendication 1, dans lequel la hauteur la plus basse du système de projection est limitée par le troisième miroir (23).

9. Système de projection selon la revendication 1, comprenant en outre :
une deuxième lentille de condensation (11),
dans lequel la deuxième lentille de condensation est interposée entre le deuxième miroir (22) et le troisième miroir (23), et est disposée de façon inclinée sur une surface de fond du système de projection.

10. Système de projection selon la revendication 5, dans lequel un chemin optique, qui relie le deuxième miroir (22) et le troisième miroir (23), se déplace vers le haut lorsqu'il est vu d'un plan horizontal.
